# EUROPÄISCHE PATENTANMELDUNG

(11) **EP 1 510 401 A2**
(43) Veröffentlichungstag der Anmeldung: **02.03.2005**
(21) Anmeldenummer: 04019666.9
(22) Anmeldetag: 19.08.2004
(51) Int. Cl.: B60Q 1/32, B60Q 1/26, F21V 21/08

(54) **Fahrzeugaussenleuchte**

(30) Priorität: 29.08.2003 DE 10339878
(71) Anmelder: Hella KGaA Hueck & Co., 59552 Lippstadt (DE)
(72) Erfinder: Pohl, Reiner, 59557 Lippstadt (DE)

(57) **Zusammenfassung**

Eine Außenleuchte (1) weist einer Halterung (2) zur Montage an einem Fahrzeug und ein an der Halterung (2) angeordnetes Leuchtengehäuse auf. Das Leuchtengehäuse hat mindestens eine innere Lichtscheibe (3) und eine wenigstens äußere Lichtscheibe (4). Die innere Lichtscheibe (3) begrenzt eine geschlossene Innenkammer (5), in der mindestens ein Leuchtmittel (6) angeordnet ist. Zwischen der inneren Lichtscheibe (3) und der äußeren Lichtscheibe (4) ist eine Außenkammer (8) gebildet, die durch mindestens zwei, durch eine Schweißnaht miteinander verbundene Wandungsabschnitte begrenzt ist. Zwischen der inneren Lichtscheibe (3) und der äußeren Lichtscheibe (4) ist eine optische Filterscheibe (9) in die Außenkammer eingelegt.

## Beschreibung

Die Erfindung betrifft eine Außenleuchte mit einer Halterung zur Montage an einem Fahrzeug, einem an der Halterung angeordneten Leuchtengehäuse, das mindestens eine innere und eine wenigstens äußere Lichtscheibe hat, wobei die innere Lichtscheibe eine geschlossene Innenkammer begrenzt, in der mindestens ein Leuchtmittel angeordnet ist, wobei zwischen der inneren Lichtscheibe und der äußeren Lichtscheibe eine Außenkammer gebildet ist, die durch mindestens zwei, durch eine Schweißnaht miteinander verbundene Wandungsabschnitte begrenzt ist.

Eine derartige, als Begrenzungsleuchte ausgebildete Außenleuchte ist aus DE 297 21 536 U1 bekannt. Sie weist eine kuppel- oder domförmige innere Lichtscheibe auf, die eine geschlossene Innenkammer umgrenzt, in der als Leuchtmittel eine Glühlampe angeordnet ist. An die innere Lichtscheibe sind links und rechts unterschiedliche äußere Lichtscheiben derart angeschweißt, dass zwischen diesen und der inneren Lichtscheibe eine wasserdichte Außenkammer gebildet ist. Durch die beiden Kammern sind das Leuchtmittel und die diesem zugeordneten elektrischen Anschlüsse vor Umwelteinflüssen und insbesondere vor Korrosion geschützt. Den Vorschriften einer Begrenzungsleuchte entsprechend, weisen die beiden äußeren Lichtscheiben unterschiedliche Farben auf. Die einzelnen Lichtscheiben, aus denen die Außenleuchte zusammengesetzt ist, erfordern jedoch noch einen gewissen Herstellungs- und Montageaufwand, da die unterschiedlich farbigen Teile zunächst in getrennten Spritzgießprozessen hergestellt und danach durch Schweißnähte wasserdicht und lagerichtig miteinander verbunden werden müssen.

Es besteht deshalb die Aufgabe, eine Außenleuchte der eingangs genannten Art zu schaffen, die einfach und kostengünstig herstellbar ist.

Diese Aufgabe wird dadurch gelöst, dass zwischen der inneren Lichtscheibe und der äußeren Lichtscheibe eine optische Filterscheibe in die Außenkammer eingelegt ist.

In vorteilhafter Weise ist es dadurch möglich, das aus der inneren und äußeren Lichtscheibe bestehende Leuchtengehäuse aus nur zwei Teilen zu fertigen, die nach dem Einlegen der Filterscheibe in die Außenkammer zur Bildung einer Mehrfarbenscheibe wasserdicht miteinander verschweißt werden. Die Außenleuchte ist dadurch kostengünstig herstellbar.

Bei einer vorteilhaften Ausführungsform der Erfindung ist ausgehend von dem Leuchtmittel in eine erste Richtung hintereinander ein erster Lichtscheibenbereich der inneren Lichtscheibe und ein erster Lichtscheibenbereich der äußeren Lichtscheibe angeordnet, wobei ausgehend von dem Leuchtmittel in eine zweite Richtung hintereinander ein zweiter Lichtscheibenbereich der inneren der Lichtscheibe und ein zweiter Lichtscheibenbereich der äußeren Lichtscheibe angeordnet sind, und wobei die Filterscheibe zur Bildung einer Mehrfarbenlichtscheibe nur zwischen den ersten Lichtscheibenbereichen angeordnet ist. Die Außenleuchte strahlt dann in den unterschiedlichen Richtungen unterschiedlich farbiges Licht ab. So kann beispielsweise bei einer Umrissleuchte die Lichtscheibe weiß oder farblos und die Filterscheibe rot ausgebildet sein, so dass die Außenleuchte nach vorne weißes und nach hinten rotes Licht abstrahlt.

Bei einer zweckmäßigen Ausgestaltung der Erfindung verläuft die Richtung, in der die ersten Lichtscheibenbereiche angeordnet sind, entgegengesetzt zu der Richtung, in der die zweiten Lichtscheibenbereiche angeordnet sind, wobei das Leuchtengehäuse vorzugsweise symmetrisch zu einer normal zu diesen Richtungen verlaufenden Ebene ausgebildet ist. Die Außenleuchte kann dann sowohl für die linke als auch für die rechte Fahrzeugseite verwendet werden, wobei das Leuchtengehäuse auf der rechten Fahrzeugseite um 180° gegenüber der linken Fahrzeugseite verdreht ist.

Besonders vorteilhaft ist, wenn ausgehend von dem Leuchtmittel in eine dritte Richtung hintereinander ein dritter Lichtscheibenbereich der inneren Lichtscheibe und ein dritter Lichtscheibenbereich der äußeren Lichtscheibe angeordnet sind, wenn der erste und zweite Lichtscheibenbereich der äußeren Lichtscheibe einstückig mit der inneren Lichtscheibe verbunden sind, wenn der dritte Lichtscheibenbereich der äußeren Lichtscheibe eine Zugangsöffnung für die Filterscheibe überdeckt und mit dem ersten und zweiten Lichtscheibenbereich der äußeren Lichtscheibe verschweißt ist. Dabei weist der dritte Lichtscheibenbereich der äußeren Lichtscheibe bevorzugt eine andere Farbe auf als der erste und zweite Lichtscheibenbereich dieser Lichtscheibe, wobei die beiden zuletzt genannten Lichtscheibenbereiche vorzugsweise weiß oder farblos und der dritte Lichtscheibenbereich der äußeren Lichtscheibe gelb ausgebildet sind. Durch diese Maßnahmen ist es möglich, auf einfache Weise eine Außen leuchte herzustellen, die in drei Richtungen unterschiedlich farbiges Licht abstrahlt, nämlich nach vorne weißes, nach hinten rotes und zur Seite gelbes Licht.

Bei einer bevorzugten Ausführungsform der Erfindung weist die innere Lichtscheibe und/oder die äußere Lichtscheibe wenigstens eine Optik auf, deren Brennpunkt an der Abstrahlstelle des Leuchtmittels angeordnet ist, wobei die Optik vorzugsweise derart ausgebildet ist, dass der Öffnungswinkel des aus der Optik austretenden Lichtbündels mindestens 80° beträgt. Die Außenleuchte kann dann als Begrenzungsleuchte in allen Anbaulagen von 0° bis 360° am Fahrzeug montiert werden, wobei jeweils die gesetzlichen Vorschriften für die Abstrahlcharakteristik erfüllt werden.

Vorteilhaft ist, wenn das Leuchtengehäuse einen kragenförmigen, umlaufenden Randbereich aufweist, der eine Zugangsöffnung zu der Innenkammer umgrenzt, wenn an der Halterung eine zu dem Randbereich passende Ringnut vorgesehen ist, wenn die Halterung zumindest im Bereich der Ringnut aus einem elastischen Werkstoff besteht ist, und wenn der kragenförmige Randbereich derart in die Ringnut eingreift, dass der elastische Werkstoff die Zugangsöffnung abdichtet. Der elastische Werkstoff der Halterung ist vorzugsweise Gummi. Das in der Innenkammer befindliche Leuchtmittel und die diesem zugeordneten elektrischen Teile sind dann gut gegen Feuchtigkeit abgedichtet. Dennoch kann das Leuchtengehäuse durch Herausziehen des kragenförmigen Randbereichs aus der Ringnut auf einfache Weise von der Halterung getrennt werden, so dass das Leuchtmittel und die Innenkammer dann gut zugänglich sind.

Bei einer zweckmäßigen Ausgestaltung der Außenleuchte weist die Halterung eine Aufnahme auf, in die das Leuchtengehäuse derart einsetzbar ist, dass mindestens ein Teilbereich der Halterung in Gebrauchsstellung das Leuchtengehäuse formschlüssig hintergreift, wobei die Halterung zumindest im Bereich der Aufnahme aus einem Werkstoff besteht, der derart elastisch verformbar ist, dass das Leuchtengehäuse von der Aufnahme trennbar ist. Dabei kann der elastische Werkstoff der Halterung in den Bereichen des Leuchtengehäuses, die nicht zur Lichtabstrahlung vorgesehen sind, derart um die Aufnahme herum angeordnet sein, dass das Leuchtengehäuse bei einer Kollision der Außenleuchte mit einem Hindernis vor mechanischer Beschädigung, insbesondere durch Stoßbelastung, geschützt ist.

Vorteilhaft ist, wenn die Halterung als Haltearm ausgebildet ist, der an seinem einen Endbereich die Aufnahme für das Leuchtengehäuse und an seinem gegenüberliegenden anderen Endbereich einen Befestigungsflansch zum Verbinden des Haltearms mit dem Fahrzeug aufweist. Die Außenleuchte kann dann auf einfache Weise seitlich an einem Lastwagen montiert werden.

Bei einer bevorzugten Ausführungsform der Erfindung ist der Haltearm von einem Kanal durchsetzt, der von dem Befestigungsflansch zu elektrischen Anschlüssen für das Leuchtmittel führt, wobei in dem Kanal elektrische Leitungen für die Stromversorgung des Leuchtmittels angeordnet sind. Die elektrischen Leitungen sind dann in dem Kanal vor Spritz- und Stauwasser geschützt.

Nachfolgend ist ein Ausführungsbeispiel der Erfindung anhand der Zeichnung näher erläutert. Es zeigt zum Teil stärker schematisiert:
- Fig. 1: eine dreidimensionale Ansicht einer Außenleuchte,
- Fig. 2: einen Längsschnitt durch die Außenleuchte,
- Fig. 3: einen Längsschnitt durch die in Fig. 2 mit III bezeichnete Ebene der Außenleuchte, und
- Fig. 4: einen Querschnitt durch die in Fig. 2 mit IV bezeichnete Ebene der Außenleuchte.

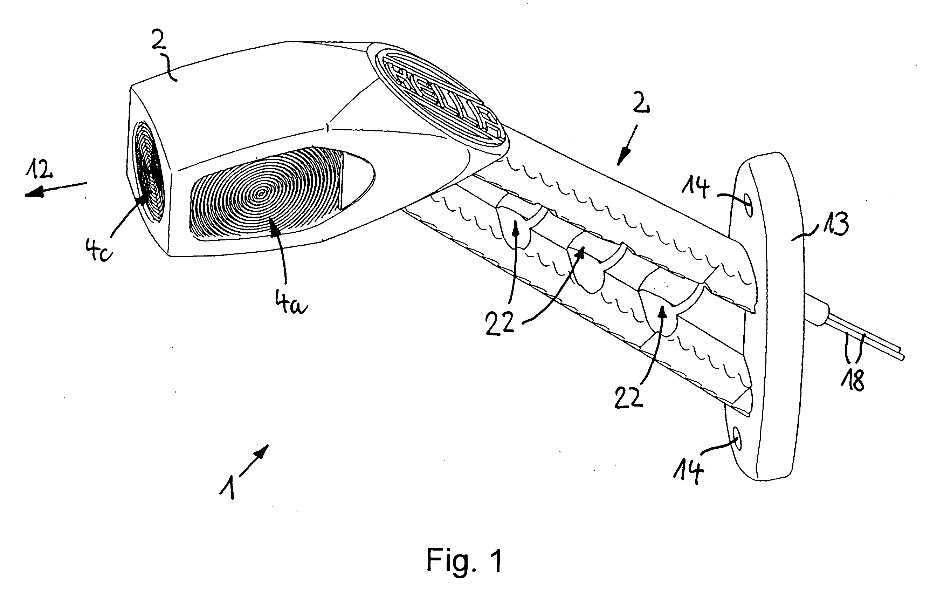

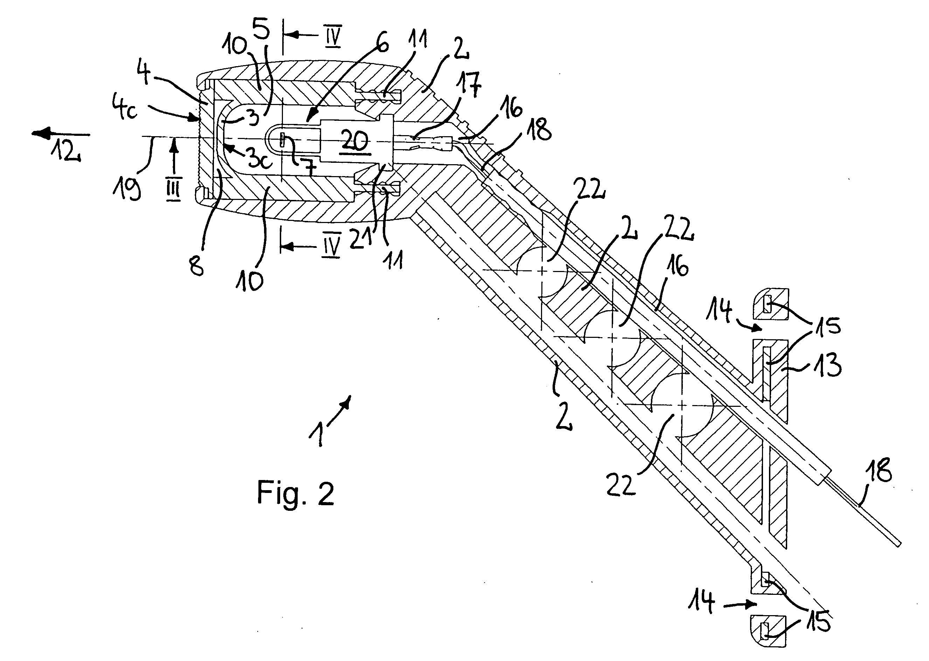

Eine in Fig. 1 und 2 im Ganzen mit 1 bezeichnete Außenleuchte weist eine Halterung 2 zur Montage an einem Fahrzeug auf. An der Halterung 2 ist ein etwa quaderförmiges Leuchtengehäuse angeordnet, das eine innere Lichtscheibe 3 und eine äußere Lichtscheibe 4 hat. Die innere Lichtscheibe 3 ist etwa glocken- oder domförmig ausgebildet und begrenzt eine geschlossene Innenkammer 5, in der ein elektrisches Leuchtmittel 6 angeordnet ist.

Die äußere Lichtscheibe 4 und die innere Lichtscheibe 3 weisen jeweils mehrere Lichtscheibenbereiche auf. Ein erster Lichtscheibenbereich 3a der inneren Lichtscheibe 3 und ein erster Lichtscheibenbereich 4a der äußeren Lichtscheibe 4 sind radial zur Abstrahlstelle 7 des Leuchtmittels 6 hintereinander angeordnet und für eine für eine vordere Begrenzungslichtfunktion vorgesehen. In Gebrauchsstellung der Außenleuchte 1 weisen die Lichtscheibenbereiche 3a, 4a etwa in Vorwärtsfahrtrichtung des Fahrzeugs.

Ein zweiter Lichtscheibenbereich 3b der inneren Lichtscheibe 3 und ein zweiter Lichtscheibenbereich 4b der äußeren Lichtscheibe 4 sind radial zur Abstrahlstelle des Leuchtmittels 6 hintereinander angeordnet und für eine hintere Begrenzungslichtfunktion ausgebildet. In Gebrauchsstellung der Außenleuchte 1 weisen die Lichtscheibenbereiche 3b, 4b etwa in die der Vorwärtsfahrtrichtung des Fahrzeugs entgegengesetzte Richtung.

Ein dritter Lichtscheibenbereich 3c der inneren Lichtscheibe 3 und ein dritter Lichtscheibenbereich 4c der äußeren Lichtscheibe 4 sind radial zur Abstrahlstelle des Leuchtmittels 6 hintereinander angeordnet und für eine Seitenbegrenzungslichtfunktion ausgebildet. In Gebrauchsstellung der Außenleuchte 1 sind die Lichtscheibenbereiche 3c, 4c an der dem Fahrzeug abgewandten Seite des Leuchtmittels 6 angeordnet und weisen in eine etwa 90° zur Vorwärtsfahrtrichtung verlaufende horizontale Richtung.

Die innere Lichtscheibe mit den Lichtscheibenbereichen 3a, 3b, 3c und der erste und zweite Lichtscheibenbereich 4a, 4b der äußeren Lichtscheibe sind einstückig miteinander verbunden. Sie sind Teil eines ersten Leuchtengehäuseteils, das als Kunststoffspritzgussteil aus einem glasklaren Werkstoff hergestellt ist. Der dritte Lichtscheibenbereich 4c der äußeren Lichtscheibe besteht das aus einem lichtdurchlässigen gelben Kunststoff und bildet ein zweites Leuchtengehäuseteil.

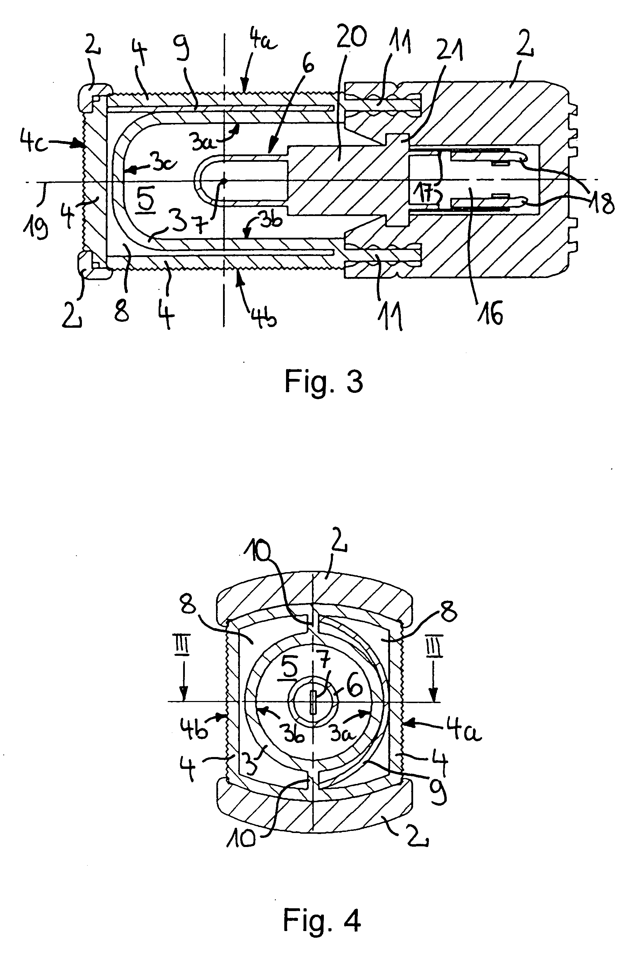

Zwischen der inneren Lichtscheibe 3 und der äußeren Lichtscheibe 4 ist eine Außenkammer 8 gebildet, in die eine rote optische Filterscheibe 9 eingelegt ist, die sich durchgängig über den ersten Lichtscheibenbereich 3b der inneren Lichtscheibe 3 und den ersten Lichtscheibenbereich 4b der äußeren Lichtscheibe 4 erstreckt. In Fig. 3 und 4 ist erkennbar, dass die Außenkammer 8 in Höhe der Lichtabstrahlstelle des Leuchtmittels 6 zwei etwa U-förmige Kammerbereiche aufweist, die durch Trennwände 10 voneinander beabstandet sind, welche die innere Lichtscheibe 3 beidseits des Leuchtmittels 6 etwa radial zur Abstrahlstelle 7 des Leuchtmittels 6 mit der äußeren Lichtscheibe 4 verbinden. In einem der U-förmigen Kammerbereiche ist die bogenförmig gekrümmte Filterscheibe 9 formschlüssig gehalten.

Bei der Fertigung der Leuchte werden zunächst die beiden die unterschiedlichen Farben aufweisenden Leuchtengehäuseteile und die Filterscheibe 9 hergestellt. Das erste, die innere Lichtscheibe 3 und den ersten und zweiten Lichtscheibenbereich 4a, 4b der äußeren Lichtscheibe 4 aufweisende Leuchtengehäuseteil hat an der Stelle, an der später das durch den dritten Lichtscheibenbereich 4c der äußeren Lichtscheibe 4 gebildete zweite Gehäuseteil angeordnet ist, eine Zugangsöffnung zu der Außenkammer 8. Durch diese Zugangsöffnung hindurch wird die Filterscheibe 9 in die Außenkammer 8 eingebracht. Danach wird das zweite Gehäuseteil 4c an der Zugangsöffnung positioniert und mittels einer einzigen, ringförmig um die Außenkammer 8 umlaufenden Schweißnaht mit dem Rand der Zugangsöffnung wasserdicht verschweißt, vorzugsweise durch Ultraschallschweißen. Die Außenkammer 8 bildet dann eine abgeschlossene Kammer, in der die Filterscheibe 9 eingeschlossen ist.

In Fig. 3 und 4 ist erkennbar, dass die Filterscheibe 9 nur zwischen dem ersten Lichtscheibenbereich 3a der inneren Lichtscheibe 3 und dem ersten Lichtscheibenbereich 4a der äußeren Lichtscheibe 4 angeordnet ist, so dass die Außenleuchte 1 entgegen der Vorwärtsfahrtrichtung des Fahrzeugs trotz der glasklaren Ausführung dieser Lichtscheibenbereiche 3a, 4a rotes Licht abstrahlt. Zwischen dem zweiten Lichtscheibenbereich 3b der inneren Lichtscheibe 3 und dem zweiten Lichtscheibenbereich 4b der äußeren Lichtscheibe 4 ist keine Filterscheibe angeordnet, weshalb die Außenleuchte 1 in Vorwärtsfahrtrichtung weißes Licht abstrahlt. Auch zwischen dem dritten Lichtscheibenbereich 3c der inneren Lichtscheibe 3 und dem dritten Lichtscheibenbereich 4c der äußeren Lichtscheibe 4 ist keine Filterscheibe vorgesehen, so dass die Außenleuchte 1 quer zur Fahrtrichtung wegen der gelben Farbe des Lichtscheibenbereichs 4c gelbes Licht abstrahlt.

Die drei Lichtscheibenbereiche 4a, 4b, 4c der äußeren Lichtscheibe 4 weisen jeweils an ihrer dem Leuchtmittel 6 abgewandten Außenseite eine Fresnel-Optik auf. Die Brennpunkte dieser Optiken sind jeweils an der Abstrahlstelle des Leuchtmittels 6 angeordnet. Die Fresnel-Optiken sind derart ausgebildet, dass der Öffnungswinkel des aus ihnen jeweils austretenden Lichtbündels mindestens 80° beträgt. Die Außenleuchte 1 erfüllt deshalb bei beliebigen Anbaulagen zwischen 0° und 360° jeweils die gesetzlichen Anforderungen an die Abstrahlcharakteristik einer Begrenzungsleuchte.

In Fig. 2 und 3 ist erkennbar, dass das Leuchtengehäuse an seinem von dem Lichtscheibenbereich 4c entfernten Ende einen kragenförmigen Randbereich 10 aufweist, der um die Innenkammer 5 umläuft und eine Zugangsöffnung zu der Innenkammer 5 umgrenzt. An der Halterung 2 ist eine zu dem Randbereich 10 passende Ringnut vorgesehen, in die der Randbereich 10 eingreift. Im Bereich der Ringnut besteht die Halterung aus einem elastischen Gummiwerkstoff, der sowohl gegen den Innenumfang als auch gegen den Außenumfang des Randbereichs 10 radial zum Leuchtmittel 6 abdichtet, In Figur 3 ist erkennbar, dass die Seitenwände der Ringnut eine wellenförmige Profilierung mit mehreren hintereinander angeordneten Dichtlippen aufweisen. Dadurch ergibt sich eine besonders gute Abdichtung der Innenkammer 5 gegen Feuchtigkeit.

In Fig. 1 und 2 ist erkennbar, dass die Halterung 2 eine Aufnahme aufweist, in die das Leuchtengehäuse derart eingesetzt ist, dass Teilbereiche des elastischen Gummiwerkstoffs der Halterung 2 das Leuchtengehäuse formschlüssig hintergreifen und somit das Leuchtengehäuse in der Aufnahme fixieren. Die Aufnahme weist an der Vorder- und Rückseite sowie an der dem Fahrzeug in Gebrauchsstellung abgewandten Seitenfläche der Außenleuchte 1 Öffnungen für die drei Lichtscheibenbereiche 4a, 4b, 4c der äußeren Lichtscheibe 4 auf. Die Elastizität des Gummiwerkstoffs ist so gewählt, dass das Leuchtengehäuse aus der Aufnahme der Halterung in Richtung des Pfeils 12 herausziehbar ist. Der schlag- und stoßabsorbierenden Gummiwerkstoff umschließt alle drei Lichtscheibenbereiche 4a, 4b, 4c der äußeren Lichtscheibe 4 sowie die Ober-, Unter- und Rückseite des Leuchtengehäuses. In Fig. 4 ist erkennbar, dass das die Lichtscheiben 3, 4 aufweisende Leuchtengehäuse derart symmetrisch ausgebildet ist, dass es in zwei um 180° um seine Längsmittelachse 18 zueinander verdrehten Lagen in die Aufnahme der Halterung 2 einsetzbar ist. Die Außenleuchte 1 kann deshalb sowohl an der linken als auch an der rechten Fahrzeugseite moniert werden.

In Fig. 1 ist erkennbar, dass die Halterung 2 als Haltearm ausgebildet ist, der an seinem einen Endbereich die Aufnahme für das Leuchtengehäuse und an seinem gegenüberliegenden anderen Endbereich einen Befestigungsflansch 13 zum Verbinden mit der Karosserie des Fahrzeugs aufweist. An dem Befestigungsflansch 13 sind Lochungen 14 für den Durchtritt von Schrauben vorgesehen. Im Bereich des Befestigungsflanschs 13 weist die Halterung 2 eine Trägerplatte 15 auf, die mit dem Gummiwerkstoff ummantelt bzw. umspritzt ist. Die Haupterstreckungsrichtung des Haltearms verläuft etwa unter einem Winkel von 45° zur Ebene des Befestigungsflansches 13. Die Längsachse des Leuchtengehäuses ist etwa rechtwinklig zur Ebene des Befestigungsflansches 13 angeordnet.

Die Halterung 2 ist von einem Kanal 16 durchsetzt ist, der von dem Befestigungsflansch 13 zu elektrischen Anschlüssen 17 für das Leuchtmittel 6 führt. In dem Kanal sind elektrische Leitungen 18 für die Stromversorgung des Leuchtmittels 6 verlegt, die von dem Gummiwerkstoff der Halterung 2 radial dichtend umschlossen sind. An einem Innenwandbereich des Kanals 16 sind dazu mehrere, in Erstreckungsrichtung der Leitungen 18 hintereinander angeordnete Dichtlippen vorgesehen, die elastisch an einer Ummantelung der Leitungen 18 anliegen.

Die elektrischen Anschlüsse 17 für das Leuchtmittel 6 sind an einem Sockelteil 20 angeordnet, das lösbar mit dem Leuchtmittel 6 verbindbar ist, beispielsweise mittels einer Steck-, Schraub- oder Bajonettverbindung. Das Sockelteil 20 ist in eine der Innenkammer 5 zugewandte Aufnahmevertiefung der Halterung 2 eingesetzt und weist an einem von dem Leuchtmittel 6 beabstandeten Außenumfangsabschnitt einen Ringbund 21 auf, der formschlüssig in eine am Innenumfang der Aufnahmevertiefung umlaufende Nut der Halterung 2 eingreift.

In Fig. 1 ist erkennbar, dass der Haltearm der Halterung 2 etwa einen doppel-T-förmigen Querschnitt aufweist und quer zu seiner der Zeichenebene in Fig. 2 entsprechenden Erstreckungsebene von mehreren in Erstreckungsrichtung des Haltearms voneinander beabstandeten Lochungen 22 durchsetzt ist, welche die Biegesteifigkeit des Haltearms in einer quer zu der Erstreckungsebene des Haltearms verlaufenden Richtung beeinflussen. Zu Erhöhung der Biegesteifigkeit des Haltearms können in die Lochungen 22 flexible Kunststoffstopfen eingesetzt sein, die in der Zeichnung nicht näher dargestellt sind. Die Kunststoffstopfen können gegebenenfalls mit dem Gummiwerkstoff der Halterung 2 umspritzt sein.

In Fig. 2 ist erkennbar, dass sich Teilbereiche der Lochungen 22 mit dem Kanal 16 schneiden, so dass zwischen den Lochungen 22 und dem Kanal 16 Wasserablauföffnungen gebildet sind. Durch diese Maßnahme wird der Dichtbereich der Ummantelung der Leitungen 18 dauerhaft vor Stauwasser geschützt.

## Patentansprüche

1. Außenleuchte (1) mit einer Halterung (2) zur Montage an einem Fahrzeug, einem an der Halterung (2) angeordneten Leuchtengehäuse, das mindestens eine innere Lichtscheibe (3) und eine wenigstens äußere Lichtscheibe (4) hat, wobei die innere Lichtscheibe (3) eine geschlossene Innenkammer (5) begrenzt, in der mindestens ein Leuchtmittel (6) angeordnet ist, wobei zwischen der inneren Lichtscheibe (3) und der äußeren Lichtscheibe (4) eine Außenkammer (8) gebildet ist, die durch mindestens zwei, durch eine Schweißnaht miteinander verbundene Wandungsabschnitte begrenzt ist, **dadurch gekennzeichnet, dass** zwischen der inneren Lichtscheibe (3) und der äußeren Lichtscheibe (4) eine optische Filterscheibe (9) in die Außenkammer eingelegt ist.

2. Außenleuchte (1) nach Anspruch 1, **dadurch gekennzeichnet, dass** ausgehend von dem Leuchtmittel (6) in eine erste Richtung hintereinander ein erster Lichtscheibenbereich (3a) der inneren Lichtscheibe (3) und ein erster Lichtscheibenbereich (4a) der äußeren Lichtscheibe (4) angeordnet sind, dass ausgehend von dem Leuchtmittel (6) in eine zweite Richtung hintereinander ein zweiter Lichtscheibenbereich (3b) der inneren der Lichtscheibe (3) und ein zweiter Lichtscheibenbereich (4b) der äußeren Lichtscheibe (4) angeordnet sind, und dass die Filterscheibe (9) zur Bildung einer Mehrfarbenlichtscheibe nur zwischen den ersten Lichtscheibenbereichen (3a, 4a) angeordnet ist.

3. Außenleuchte (1) nach Anspruch 1 oder 2, **dadurch gekennzeichnet, dass** die Richtung, in der die ersten Lichtscheibenbereiche (3a, 4a) angeordnet sind, entgegengesetzt zu der Richtung verläuft, in der die zweiten Lichtscheibenbereiche (3b, 4b) angeordnet sind und dass das Leuchtengehäuse vorzugsweise symmetrisch zu einer normal zu diesen Richtungen verlaufenden Ebene ausgebildet ist.

4. Außenleuchte (1) nach einem der Ansprüche 1 bis 3, **dadurch gekennzeichnet, dass** ausgehend von dem Leuchtmittel (6) in eine dritte Richtung hintereinander ein dritter Lichtscheibenbereich (3c) der inneren Lichtscheibe (3) und ein dritter Lichtscheibenbereich (4c) der äußeren Lichtscheibe (4) angeordnet sind, dass der erste und zweite Lichtscheibenbereich (4a, 4b) der äußeren Lichtscheibe. (4) einstückig mit der inneren Lichtscheibe (3) verbunden sind, dass der dritte Lichtscheibenbereich (4c) der äußeren Lichtscheibe (4) eine Zugangsöffnung für die Filterscheibe (9) überdeckt und mit dem ersten und zweiten Lichtscheibenbereich (4a, 4b) der äußeren Lichtscheibe (4) verschweißt ist.

5. Außenleuchte (1) nach einem der Ansprüche 1 bis 4, **dadurch gekennzeichnet, dass** der dritte Lichtscheibenbereich (4c) der äußeren Lichtscheibe (4) eine andere Farbe aufweist als der erste und zweite Lichtscheibenbereich (4a, 4b) dieser Lichtscheibe (4), und dass die beiden zuletzt genannten Lichtscheibenbereiche (4a, 4b) vorzugsweise weiß oder farblos und der dritte Lichtscheibenbereich (4c) der äußeren Lichtscheibe (4) gelb ausgebildet sind.

6. Außenleuchte (1) nach einem der Ansprüche 1 bis 5, **dadurch gekennzeichnet, dass** die innere Lichtscheibe (3) und/oder die äußere Lichtscheibe (4) wenigstens eine Optik aufweist, deren Brennpunkt an der Abstrahlstelle (7) des Leuchtmittels (6) angeordnet ist, und dass die Optik vorzugsweise derart ausgebildet ist, dass der Öffnungswinkel des aus der Optik austretenden Lichtbündels mindestens 80° beträgt.

7. Außenleuchte (1) nach einem der Ansprüche 1 bis 7, **dadurch gekennzeichnet, dass** das Leuchtengehäuse einen kragenförmigen, umlaufenden Randbereich (11) aufweist, der eine Zugangsöffnung zu der Innenkammer (5) umgrenzt, dass an der Halterung (2) eine zu dem Randbereich (11) passende Ringnut vorgesehen ist, dass die Halterung (2) zumindest im Bereich der Ringnut aus einem elastischen Werkstoff besteht ist, und dass der kragenförmige Randbereich (11) derart in die Ringnut eingreift, dass der elastische Werkstoff die Zugangsöffnung abdichtet.

8. Außenleuchte (1) nach einem der Ansprüche 1 bis 7, **dadurch gekennzeichnet, dass** die Halterung (2) eine Aufnahme aufweist, in die das Leuchtengehäuse derart einsetzbar ist, dass mindestens ein Teilbereich der Halterung (2) in Gebrauchsstellung das Leuchtengehäuse formschlüssig hintergreift, dass die Halterung (2) zumindest im Bereich der Aufnahme aus einem Werkstoff besteht, der derart elastisch verformbar ist, dass das Leuchtengehäuse von der Aufnahme trennbar ist.

9. Außenleuchte (1) nach einem der Ansprüche 1 bis 8, **dadurch gekennzeichnet, dass** die Halterung (2) als Haltearm ausgebildet ist, der an seinem einen Endbereich die Aufnahme für das Leuchtengehäuse und an seinem gegenüberliegenden anderen Endbereich einen Befestigungsflansch (13) zum Verbinden des Haltearms mit dem Fahrzeug aufweist.

10. Außenleuchte (1) nach einem der Ansprüche 1 bis 9, **dadurch gekennzeichnet, dass** der Haltearm von einem Kanal (16) durchsetzt ist, der von dem Befestigungsflansch (13) zu elektrischen Anschlüssen (17) für das Leuchtmittel führt, und dass in dem Kanal (16) elektrische Leitungen (18) für die Stromversorgung des Leuchtmittels (6) angeordnet sind.
